# EUROPEAN PATENT APPLICATION

(11) **EP 2 860 059 A2**
(43) Date of publication of application: **15.04.2015**
(21) Application number: 14187636.7
(22) Date of filing: 03.10.2014
(51) Int. Cl.: B60L 11/18, B60L 1/00, B60L 3/00

(54) **Electric vehicle power conversion system**

(30) Priority: 04.10.2013 JP 2013208865; 07.04.2014 KR 20140041458
(71) Applicant: Samsung SDI Co., Ltd., Yongin-si, Gyeonggi-do (KR)
(72) Inventor: Yamane, Futoshi, Kanagawa-ken (JP); Ishikawa, Masami, Kanagawa-ken (JP); Muraoka, Mitsutoshi, Kanagawa-ken (JP); Yoshida, Taro, Kanagawa-ken (JP); Furusawa, Kenji, Kanagawa-ken (JP); Murayama, Yoshinari, Kanagawa-ken (JP)
(74) Representative: Mounteney, Simon James

(57) **Abstract**

An electric vehicle power conversion system may include an exclusive discharge circuit for discharging stored charges of a smoothing condenser. The electric vehicle power conversion system may also include a discharge controller for driving a DC/DC converter if a control circuit for controlling the electric vehicle power conversion system detects a fault of an exclusive discharge circuit, such that the stored charges of the smoothing condenser may be supplied to auxiliary devices or a DC auxiliary power supply and be discharged therethrough.

## Description

### BACKGROUND

### 1. Field

Embodiments provide an electric vehicle power conversion system for use in electric vehicles such as hybrid or electric vehicles, etc.

### 2. Description of the Related Art

Power conversion systems for electric vehicles may include retrogressive or regenerative systems.

Such a system may, for example, perform a retrogressive operation for boosting a DC voltage from a DC main power supply (for example, a 48 V battery) through a single boosting circuit, converting the DC voltage into an AC voltage through an inverter circuit, and outputting the AC voltage to a motor generator, and a regenerative operation for supplying regenerative power of the motor generator to the DC main power supply, auxiliary devices (for example, electric power steering, an air conditioner, an ECU, etc.) of an electric vehicle, and a DC auxiliary power supply (for example, 12 V/24 V battery for the auxiliary devices) via the inverter circuit and the boosting circuit.

In such a power conversion system, when the power conversion system stops due to an off-operation of an ignition key, a fault, or an accident by vehicle collision, stored charges in a smoothing condenser (DC link condenser) installed between electrodes of a main circuit, such as a voltage booster circuit or an inverter circuit, etc., need to be forcedly discharged (active discharge) within a predetermined time, such that an inter-terminal voltage of the smoothing condenser may be decreased to a safe voltage level.

For example, after an exclusive discharge circuit configured to connect a resistor and a semiconductor switch element is connected between the electrodes of the main circuit and then a switch for opening/closing an electrical circuit connected to output terminals of the DC main power supply is blocked, the switch element of the exclusive discharge circuit may be turned on to forcedly discharge the stored charges from the smoothing condenser through the resistor.

However, when the exclusive discharge circuit fails, the forced discharging of the smoothing condenser may not be performed, and the inter-terminal voltage of the smoothing condenser may maintain a high-voltage level even after the predetermined time elapses.

### SUMMARY

The invention sets out to provide an electric vehicle power conversion system for reliably discharging stored charges from a smoothing condenser even if an exclusive discharge circuit is faulty.

Accordingly an electric vehicle power conversion system according to the invention may include a motor driving power system connected to a DC main power supply and outputting a DC voltage therefrom to a motor generator through an inverter circuit, an auxiliary device power system connected to the DC main power supply in parallel with the motor driving power system and supplying power to a DC auxiliary power supply or auxiliary devices of an electric vehicle through a DC/DC converter, and a control circuit that controls the motor driving power system and the auxiliary device power system. The motor driving power system may include a smoothing condenser that smoothes the DC voltage, a resistor, and a semiconductor switch element connected in series and may include an exclusive discharge circuit for discharging stored charges from the smoothing condenser. The control circuit may include a discharge controller that drives the DC/DC converter upon detecting a failure of the exclusive discharge circuit and to supply the stored charges from the smoothing condenser to the auxiliary devices or the DC auxiliary power supply and discharge the stored charges therethrough.

A failure of the exclusive discharge circuit may be detectable by the discharge controller when an inter-terminal voltage of the smoothing condenser is not discharged to a target voltage within a predetermined time from a starting of a discharging.

The motor driving power system may include a voltage booster circuit that voltage-converts the DC voltage from the DC main power supply.

The smoothing condenser may include a first smoothing condenser connected between the DC main power supply and the voltage booster circuit, and a second smoothing condenser connected between the voltage booster circuit and the inverter circuit.

At least some of the above and other features of the invention are set out in the claims.

### BRIEF DESCRIPTION OF THE DRAWINGS

Features of the invention will be made apparent to those of skill in the art by describing in detail embodiments thereof with reference to the attached drawings in which:
FIG. 1 illustrates a circuit configuration of an electric vehicle power conversion system according to an embodiment of the invention.
FIG. 2 illustrates a flowchart of a discharge process performed by a discharge controller in the same embodiment as FIG. 1.
FIG. 3 illustrates a schematic view showing a discharge process through an auxiliary device power system in the same embodiment as FIG. 1.
FIG. 4 illustrates a schematic view showing a discharge process through a general exclusive discharge circuit.
FIG. 5 illustrates a circuit configuration of a modified embodiment of the invention primarily including a plurality of voltage booster circuits connected in parallel.

### DETAILED DESCRIPTION

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey implementations to those skilled in the art. Like reference numerals refer to like elements throughout.

An embodiment of an electric vehicle power conversion system will now be described with reference to the drawings.

The electric vehicle power conversion system 100 according to embodiments of the invention may be installed in electric vehicles such as a hybrid vehicle or an electric vehicle to retrogressively or regeneratively drive a motor generator 5.

Either a parallel or split type (serial-parallel type) or a serial type hybrid vehicle may use the motor generator 5.

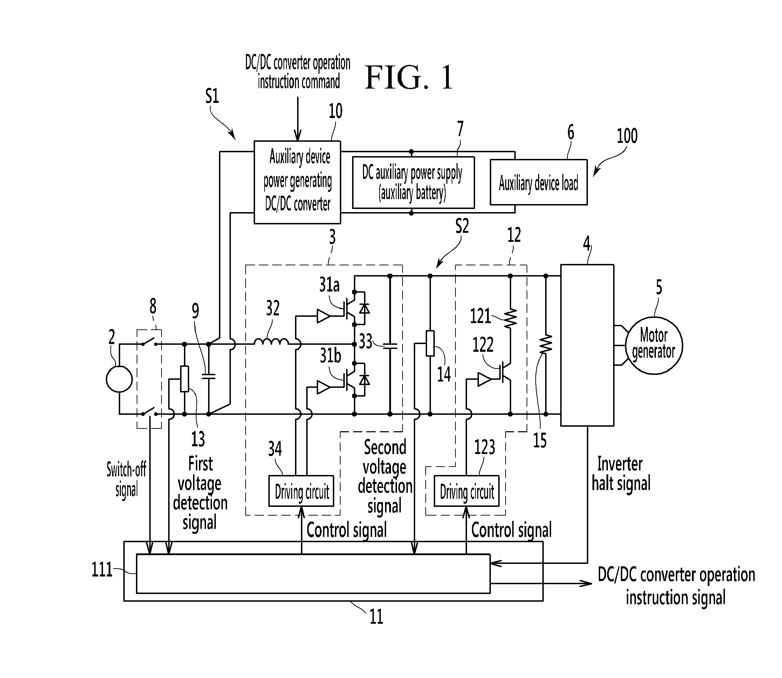

The electric vehicle power conversion system 100, as shown in FIG. 1, may perform a retrogressive operation of boosting a DC voltage from a DC main power supply 2 through a voltage booster circuit 3, converting the DC voltage into a three-phase AC voltage through an inverter circuit 4, and then outputting the AC voltage to the motor generator 5, and a regenerative operation of supplying regenerated power from the motor generator 5 through the inverter circuit 4 and the voltage booster circuit 3 to the DC main power supply 2, an auxiliary device 6, and a DC auxiliary power supply 7.

For example, the electric vehicle power conversion system 100 may include: the DC main power supply 2 (e.g., a 48 V lithium-ion battery); electrical circuit switches (DC contactors) 8 for closing/opening electrical circuits respectively connected to output terminals of the DC main power supply 2; a first smoothing condenser (DC link condenser) 9 installed between the switches 8; an auxiliary device power system S1 connected via the first smoothing condenser 9 and supplying power to each of auxiliary devices 6 of the electric vehicle (e.g., electrically-controlled power steering, an air-conditioner, an ECU, etc.) and the DC auxiliary power supply 7 (e.g. a 12 V/24 V battery); and a motor driving power system S2 connected in parallel with the an auxiliary device power system S1 via the first smoothing condenser 9 and configured to retrogressively or regeneratively drive the motor generator 5.

The first smoothing condenser 9 may be included in the motor driving power system S2.

The auxiliary device power system S1 may further include a DC/DC converter 10, and each auxiliary device 6 and the DC auxiliary power supply 7 may be connected in parallel at output terminals of the DC/DC converter 10.

The motor driving power system S2 may include the voltage booster circuit 3, (e.g., for voltage-converting the DC voltage from the DC main power supply 2), and the inverter circuit 4 (that may convert a DC voltage output from the voltage booster circuit 3 into an AC voltage and output it to the motor generator 5).

The voltage booster circuit 3 may include power semiconductors 31a and 31b, for example, an IGBT, a MOSFET, etc., a reactor 32, and a second smoothing condenser 33.

For example, the voltage booster circuit 3 may include upper and lower arms 31a and 31b that include serial-connected power semiconductors. A positive terminal of the inverter circuit 4 may be connected to a semiconductor terminal (e.g., a collector terminal or drain terminal) of the upper arm 31a, and a negative terminal of the DC main power supply 2 may be connected to a semiconductor terminal (e.g., an emitter terminal or source terminal) of the lower arm 31b.

The second smoothing condenser 33 may be connected between the semiconductor terminals of the upper and lower arms 31a and 31b such that it is connected in parallel with the lower and upper arms 31a and 31b at output terminals of the voltage booster circuit 3.

One terminal of the reactor 32 may be connected between the other terminal of the upper arm 31a (emitter terminal or source terminal) and the other terminal of the lower arm 31b (collector terminal or drain terminal), e.g., at a serial connection point therebetween, while the other terminal, the reactor 32, may be connected to the positive terminal of the DC main power supply 2.

The upper and lower arms 31a and 31b of the voltage booster circuit 3 may be configured such that free-wheeling diodes are inversely connected in parallel.

The voltage booster circuit 3 configured as described above may be provided with a driving circuit 34 for driving the upper and lower arms 31a and 31b.

The driving circuit 34 may allow the upper and lower arms 31a and 31b to be alternately switched according to a predetermined duty ratio such that the reactor 32 may be charged and discharged to deliver power in a retrogressive (boosting) direction or regenerative (bucking) direction.

The driving circuit 34 may receive a driving command signal (control signal) from a control circuit 11 that will be described below.

The second smoothing condenser 33 (installed in the voltage booster circuit 3) may function as a smoothing condenser at input terminals of the inverter circuit 4.

For example, the second smoothing condenser 33 may be commonly used by the voltage booster circuit 3 and the inverter circuit 4.

The inverter circuit 4 may include a three-phase bridge circuit (not shown) in which three switching circuits including power semiconductors, such as an IGBT or MOSFET, are connected in parallel, and a driving circuit (not shown) for driving a power semiconductor of each switching circuit.

The driving circuit may receive a driving command signal (control signal) from a control circuit 11 that will be described below.

The auxiliary device power system S1 and the motor driving power system S2 configured as described above may be controlled by the control circuit 11.

To perform the retrogressive/regenerative power control required for the operation of the electric vehicle, the control circuit 11 may generate driving command signals for each power semiconductor through an optimal power linkage to the voltage booster circuits 3 and the inverter circuit 4 based on a required operation command from an overall controller (e.g., an upper ECU), and may transfer the driving command signals for the corresponding power semiconductor to each driving circuit as a switching command.

Accordingly, the electric vehicle power conversion system 100 may perform the retrogressive operation of boosting the DC voltage of the DC main power supply 2 through the voltage booster circuit 3, converting the DC voltage into the AC voltage through the inverter circuit 4, and outputting the AC voltage to the motor generator 5. The electric vehicle power conversion system 100 may also perform the regenerative operation of supplying the regenerative power of the motor generator 5 to the DC main power supply 2, the auxiliary device 6 of the electric vehicle, and the DC auxiliary power supply 7 via the inverter circuit 4 and the voltage booster circuit 3.

The control circuit 11 may be configured such that it is physically divided to respectively correspond to the voltage booster circuit 3 and the inverter circuit 4, but can be commonly used and integrally formed to reduce the number of parts for cost reduction.

In the electric vehicle power conversion system 100, the motor driving power system S2 may include an exclusive discharge circuit 12 for discharging stored charges from each of the smoothing condensers 9 and 33.

Reference numeral 15 illustrated in FIG. 1 refers to a self-discharge resistor.

The exclusive discharge circuit 12 may be configured to connect a resistor 121 and a semiconductor switch element 122, (e.g., an IGBT or a MOSFET), in series, and may be disposed between main circuit electrodes of the power conversion system 100 while being connected therebetween.

For example, the exclusive discharge circuit 12 may be disposed between the voltage booster circuit 3 and the inverter circuit 4, and may be installed between the main circuit electrodes while being connected therebetween.

The exclusive discharge circuit 12 may include a driving circuit 123 (e.g., for driving the semiconductor switch element 122).

The driving circuit 123 may turn on the semiconductor switch element 122 to perform a discharge function of the exclusive discharge circuit 12.

The driving circuit 122 may receive a driving command signal (control signal) from the control circuit 11.

The control circuit 11 of the present embodiment may include a discharge controller 111 (e.g., for discharging the stored charges from each of the smoothing condensers 9 and 33 through the exclusive discharge circuit 12 or auxiliary device power system S1).

The control circuit 11 may be an exclusive or general purpose computer circuit including a CPU, a memory, an I/O interface, an AD converter, etc., and may perform a function of the discharge controller 111 depending on a control program stored in the memory.

The discharge controller 111 may include a fault detection function for detecting whether a fault of the exclusive discharge circuit 12 occurs, and the discharge circuit for the stored charges of the smoothing condensers 9 and 33 may be changed to the exclusive discharge circuit 12 and the auxiliary device power system S1 depending on whether the fault of the exclusive discharge circuit 12 occurs.

The discharge controller 111 may simultaneously receive a signal indicating a halt of the power conversion system 100, (e.g., an inverter halt signal indicating a halt of the inverter circuit 4 and a switch-off signal indicating an off-state (blocked) of the electrical switch 8), and may start a discharge process of the smoothing condensers 9 and 33.

The discharge controller 111 may receive a first voltage detection signal from a first voltage detector 13 (that is installed between the electrical circuit switch 8 and the voltage booster circuit 3) and may detect an inter-terminal voltage of the first smoothing condenser 9 at the same time while receiving a second voltage detection signal from a second voltage detector 14 (that may be installed between the voltage booster circuit 3 and the inverter circuit 4) and may detects an inter-terminal voltage of the second smoothing condenser 33.

After using the first and second voltage detection signals and detecting whether the fault of the exclusive discharge circuit 12 occurs, the smoothing condensers 9 and 33 may be discharged through the exclusive discharge circuit 12, if the fault of the exclusive discharge circuit 12 has not occurred, or may be discharged through the auxiliary device power system S1, if the fault of the exclusive discharge circuit 12 has occurred.

Hereinafter, a fault detection method of the exclusive discharge circuit 12 using the discharge controller 111 will be described as an example.

The discharge controller 111 may use a fault detection time Tc, which indicates a predetermined time elapsed from a preset forced discharge start, and a target value Vc of the inter-terminal voltage of the second smoothing condenser 33 after the fault detection time Tc has elapsed, and may detect the fault of the exclusive discharge circuit 12 if not discharged to the target value Vc within the fault detection time Tc.

Because the inter-terminal voltage of the second smoothing condenser 33 may be greater than that of the first smoothing condenser 9 and the inter-terminal voltage of the second smoothing condenser 33 may decrease first by the forced discharge start, the inter-terminal voltage of the second smoothing condenser 33 may be used to detect the fault.

For example, the inter-terminal voltages of the second smoothing condenser 33 may be detected at predetermined time intervals (e.g., 0.1 second intervals) until the elapse of the fault detection time Tc, such that the fault may be determined depending on whether the inter-terminal voltage can be discharged to the target value Vc.

In this case, the target value Vc of the inter-terminal voltage after the elapse of the fault detection time Tc may be determined by an inter-terminal voltage vs. discharge-time characteristic curve of the second smoothing condenser 33 resulting from the forced discharge start.

Alternatively, the fault detection of the exclusive discharge circuit 12 may be determined from variations (e.g., a decreasing rate, a decreasing amount, or the like), of the inter-terminal voltage in the fault detection time Tc.

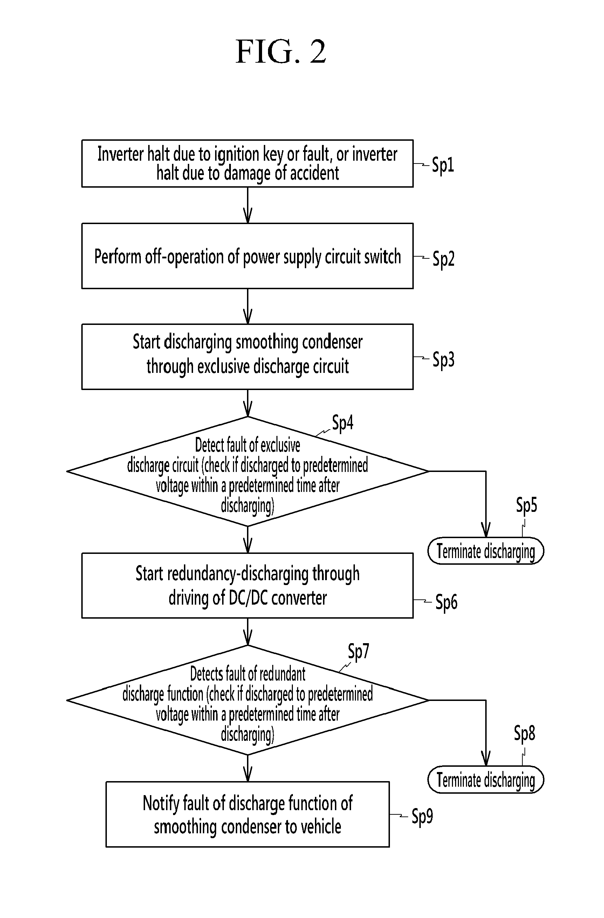

Hereinafter, a discharging method of the smoothing condensers 9 and 33 of power conversion system 100 through the discharge controller 111 will be described with reference to FIGS. 2, 3, and 4.

First, the discharge controller 111 may receive a halt signal of the inverter circuit 4 that is generated when an ignition key is turned off or the power conversion system 100 is halted by the fault or an accident such as a car crash (step Sp1).

In addition, the discharge controller 111 may receive a switch-off signal that is generated by the halt of the power conversion system 100 and may indicate an off-operation of the electrical circuit switch 8 (step Sp2).

Alternatively, the off-operation of the electrical circuit switch 8 may be executed by the discharge controller 111.

The discharge controller 111 having received the halt signal of the inverter 4 and the switch-off signal may start discharging the smoothing condensers 9 and 33 through the exclusive discharge circuit 12 (step Sp3).

For example, the discharge controller 111 may output a driving command signal (control signal) for turning on the semiconductor switch element 122 to the driving circuit 123 of the exclusive discharge circuit 12.

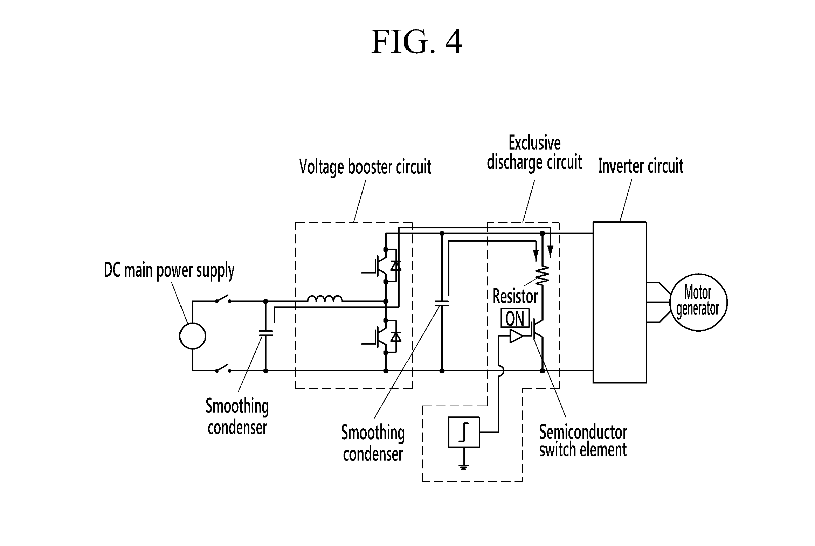

Then, as shown in FIG. 4, the charges stored in the first and second smoothing condensers 9 and 33 (through the free-wheeling diodes inversely connected in parallel to the upper arm 31a) may be discharged through the resistor 121 of the exclusive discharge circuit 12.

The discharging through the exclusive discharge circuit 12 may starts from the second smoothing condenser 33 having the greater inter-terminal voltage, and once the inter-terminal voltage of the second smoothing condenser 33 is equal to that of the first smoothing condenser 9, the discharging of the first smoothing condenser 9 may be performed together with the discharging of the second smoothing condenser 33.

The discharge controller 111 may receive the voltage detection signals from the respective voltage detection units 13 and 14 at the same time when starting discharging through the exclusive discharge circuit 12, and may determine whether the fault of the exclusive discharge circuit 12 occurs depending on whether the inter-terminal voltage can be discharged to the target value Vc within the fault detection time Tc (step Sp4).

For example, the discharge controller 111 may detect the fault of the exclusive discharge circuit 12 if the inter-terminal voltage of the second smoothing condenser 33 is not discharged to the target value Vc within the fault detection time Tc.

The discharge controller 111 may continue discharging if the inter-terminal voltage of the second smoothing condenser 33 is discharged to the target value Vc within the fault detection time Tc, e.g., if the fault of the exclusive discharge circuit 12 has not occurred, and may terminate discharging when the inter-terminal voltage reaches a predetermined safety voltage, e.g., the target value Vd, within an allowed discharge time Td (step Sp5).

In contrast, the discharge controller 111 may start discharging the smoothing condensers 9 and 33 through the auxiliary device power system S1 if the inter-terminal voltage of the second smoothing condenser 33 is not discharged to the target value Vc within the fault detection time Tc, e.g., if the fault of the exclusive discharge circuit 12 has occurred (step Sp6).

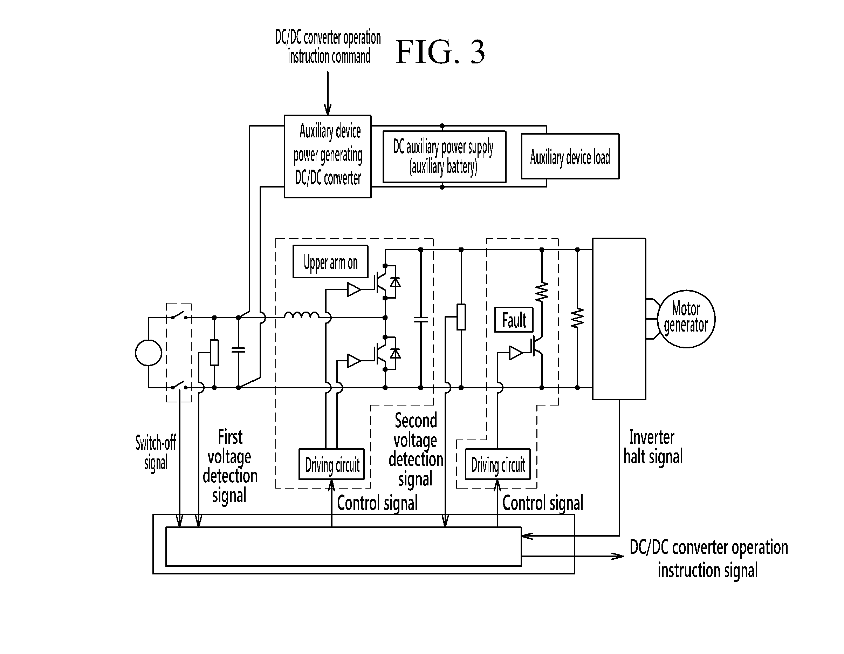

For example, as shown in FIG. 3, the discharge controller 111 may output a driving command signal (control signal) for turning on only the upper arm 31a of the voltage booster circuit 3 at the same time when outputting an driving command signal (control signal) to the DC/DC converter 10 of the auxiliary device power system S1.

Accordingly, the stored charges of the second and first smoothing condensers 33 and 9 may be supplied to the respective auxiliary devices 6 and the DC auxiliary power supply 7 and be discharged therethrough.

In addition, discharging through the auxiliary device power system S1 may be performed at the same time when the charges of the second smoothing condenser 33 having the greater inter-terminal voltage are redistributed to the first smoothing condenser 9, and thus the voltage in the first smoothing condenser 9 may have the same potential as that in the second smoothing condenser 33.

Similarly to the discharging through the exclusive discharge circuit 12 (that is described above together with the starting discharging through the auxiliary device power system S1), the discharge controller 111 may receive the voltage detection signals from the respective voltage detection units 13 and 14, and may detect whether a fault of the discharging through the auxiliary device power system S1 occurs depending on whether the inter-terminal voltage can be discharged to a target value Vc' within a fault detection time Tc' (step Sp7).

The fault detection time Tc' and the target value Vc' of the discharging through the auxiliary device power system S1 may be the same as or different from the fault detection time Tc and the target value Vc of the discharging through the exclusive discharge circuit 12.

The discharge controller 111 may detect the fault of the discharging through the auxiliary device power system S1 depending on whether the inter-terminal voltage of the first smoothing condenser 9 can be discharged to a target value Vc1' within a fault detection time Tc1' and whether the inter-terminal voltage of the second smoothing condenser 33 can be discharged to a target value Vc2' within a fault detection time Tc2'.

The discharge controller 111 may continue discharging if the inter-terminal voltages of the smoothing condensers 9 and 33 are discharged to the target value Vc' within the fault detection time Tc', e.g., if the fault of the discharging through the auxiliary device power system S1 has not occurred, and may terminate discharging after being discharged to the target value Vd within the allowed discharge time Td, e.g., the predetermined safety voltage (step Sp8).

The fault detection time Tc of the exclusive discharge circuit 12, the fault detection time Tc' of the discharging through the auxiliary device power system S1, and the discharging time through the auxiliary device power system S1 may be added to be less than the allowed discharge time Td.

In addition, after the fault of the exclusive discharge circuit 12 is detected to perform the discharging through the auxiliary device power system S1, the discharge controller 111 may directly perform the discharging through the auxiliary device power system S 1 while omitting the detecting of the exclusive discharge circuit 12.

In contrast, if one of the inter-terminal voltages of the first and second smoothing condensers 9 and 33 is not discharged to the target value Vc' within the fault detection time Tc', e.g., if the fault of the discharging through the auxiliary device power system S1 has occurred, the discharge controller 111 may terminate discharging and may notify the fault state of the discharging function of the power conversion system 100, e.g., to a driver via a display, or a speaker, etc. that is installed in the electric vehicle (step Sp9).

The discharge controller 111 may detect the fault of the exclusive discharge circuit 12, and the discharge controller 111 may allow the stored charges of the smoothing condensers 9 and 33 to be discharged through the exclusive discharge circuit 12 as usual if the fault of the exclusive discharge circuit 12 does not occur, such that the respective inter-terminal voltages of the smoothing condensers 9 and 33 can be discharged to the safety value within a predetermined time.

In addition, when the fault of the exclusive discharge circuit 12 has occurred, the discharge controller 111 may control the DC/DC converter 10 of the auxiliary device power system S1 and enable the stored charges of the smoothing condensers 9 and 33 to be discharged through the auxiliary device 6 or DC auxiliary power supply 7, such that the inter-terminal voltages of the smoothing condensers 9 and 33 can be reduced to the safety value within the predetermined time.

Because the DC/DC converter 10 of the auxiliary device power system S1 may be used (and thus no additional circuit or part may be required), the stored charges of the smoothing condensers 9 and 33 may be discharged through the existing circuit, and the discharging function of the smoothing condensers 9 and 33 may be redundantly provided.

Further, the stored charges of the smoothing condensers 9 and 33 may be supplied to the DC auxiliary power supply 7 to be discharged therethrough, such that they can be stored as energy without consuming the charges stored in the smoothing condensers 9 and 33.

However, embodiments of the invention are not limited thereto.

For example, the discharge controller 111 may be configured to detect the fault of the exclusive discharge circuit 12 by using the inter-terminal voltage of the second smoothing condenser 33, and may be configured to detect the fault of the exclusive discharge circuit 12 by using the inter-terminal voltage of the first smoothing condenser 9 or both of the inter-terminal voltages of the first and second smoothing condensers 9 and 33.

In this case, the fault may be detected only after the inter-terminal voltage of the first smoothing condenser 9 is equal to that of the second smoothing condenser 33.

Alternatively, the motor driving power system S2 may have a configuration in which the voltage booster circuit 3 is not included, and the DC main power supply 2 is directly connected to the inverter circuit 4.

In this case, the motor driving power system S2 may have a configuration in which the first smoothing condenser 9 is installed while the second smoothing condenser 33 is not installed.

Alternatively, the motor driving power system S2 may be configured to not include the exclusive discharge circuit 12.

In this case, the discharge controller 111 may perform the control sequences after the step Sp6 while omitting the steps Sp1 to Sp5.

Accordingly, even if the motor driving power system S2 is not configured to be installed with the exclusive discharge circuit 12, the discharge controller 111 may supply the stored charges from the smoothing condensers 9 and 33 to the auxiliary device 6 or DC auxiliary power supply 7 to discharge them therethrough.

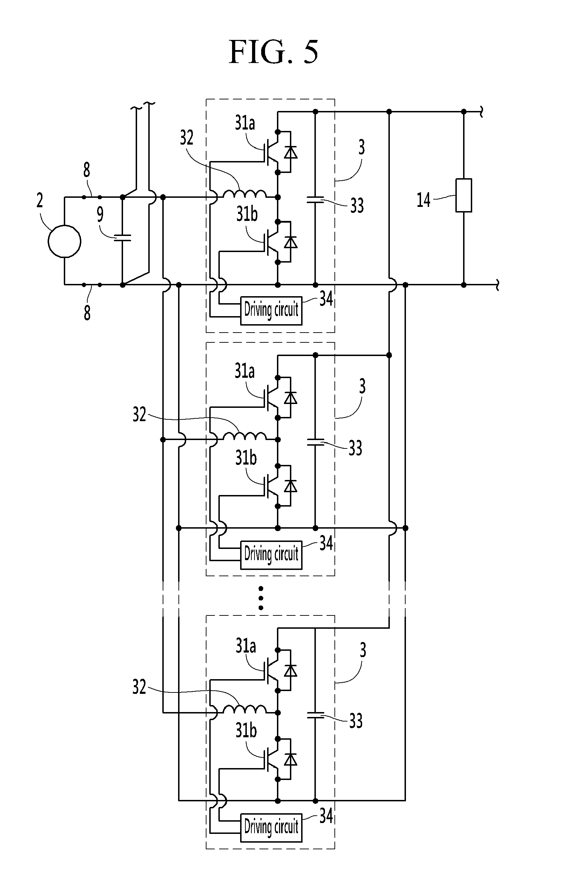

Alternatively, as shown in FIG. 5, a plurality of voltage booster circuits 3 may be connected in parallel with the DC main power supply 2 at the same time when each of the parallel-connected voltage booster circuits 3 may be independently provided with the driving circuit 34.

When the fault occurs in at least one of the voltage booster circuits 3, the control circuit 11 outputting the control signal to the driving circuit 34 may be configured to halt the operation of the faulty voltage booster circuit 3, to set a power control value according to the number of the remaining normal voltage booster circuits 3, and to control the remaining normal voltage booster circuits 3 and the inverter circuit 4 according to the power control value.

As described above, the plurality of voltage booster circuits 3 may be installed in parallel, and the redundancy for supplying power to the power conversion system 100 may be improved.

In a configuration without an alternator, the plurality of voltage booster circuits 3 may be installed in parallel, and the DC main power supply 2, the auxiliary device 6 of the electric vehicle, and the DC auxiliary power supply 7 may be supplied with power.

Further, the plurality of voltage booster circuits 3 may be installed in parallel, and thus the current may be distributed to each of the voltage booster circuits 3, such that high efficiency of the voltage booster circuits 3 and performance enhancement such as the down-sizing and longer life of the parts may be achieved.

Further, when a fault occurs in at least one of the voltage booster circuits 3, the discharge controller 111 may be set a power limiting value according to the number of remaining normal voltage booster circuits 3 and to control the remaining normal voltage booster circuits 3 and the inverter circuit 4 according to the power limit value, such that it may continue a power-limited operation of the motor generator 5 so as to charge the regenerative power to the DC main power supply 2, the auxiliary device 6 of the electric vehicle, and the DC auxiliary power supply 7 even after some of the voltage booster circuits 3 may fail.

Accordingly, a limp home mode system may be implemented to safely evacuate the driver on board in the electric vehicle or to take the electric vehicle to a repair shop.

In addition, the smoothing condensers 33 may be installed at each output terminal of the parallel-connected voltage booster circuits 3, and each smoothing condenser 33 may function as the smoothing condenser to the input terminals of the inverter circuit 4.

The smoothing condensers 33 may be installed at each output terminal of the parallel-connected voltage booster circuits 3, a ripple current may be reduced by the current distribution in charging/discharging the smoothing condenser 33 when receiving/transmitting the power from/to the inverter circuit 4, the down-sizing or reduction in power loss of the smoothing condenser may be achieved, and the performance may be improved.

In addition, even when one of the voltage booster circuits 3 fails, the stored charges of the smoothing condenser 33 of the failed voltage booster circuit 3 may be transmitted through the other voltage booster circuit 3 to be discharged through the auxiliary device power system S 1.

An electric vehicle power conversion system according to the present invention may include: a motor driving power system connected to a DC main power supply and outputting a DC voltage therefrom to a motor generator through an inverter circuit; an auxiliary device power system connected to the DC main power supply in parallel with the motor driving power system and supplying power to auxiliary devices or a DC auxiliary power supply of an electric vehicle through the DC/DC converter; and a control circuit for controlling the motor driving power system and the auxiliary device power system, wherein the motor driving power system may be configured to connect a smoothing condenser for smoothing the DC voltage, a resistor, and a semiconductor switch element in series and to include an exclusive discharge circuit for discharging stored charges from the smoothing condenser, and wherein the control circuit includes a discharge controller configured to drive the DC/DC converter upon detecting a failure of the exclusive discharge circuit and to supply the stored charges from the smoothing condenser to the auxiliary devices or the DC auxiliary power supply so as to discharge them therethrough.

In addition, a control device of the electric vehicle power conversion system according to the present invention may include: a motor driving power system connected to a DC main power supply and outputting a DC voltage therefrom to a motor generator through an inverter circuit; and an auxiliary device power system connected to the DC main power supply to be in parallel with the motor driving power system and supplying power to auxiliary devices or a DC auxiliary power supply of an electric vehicle through the DC/DC converter, wherein the motor driving power system, as the control device of the electric vehicle power conversion system configured to connect a smoothing condenser for smoothing the DC voltage, a resistor, and a semiconductor switch element in series and to include an exclusive discharge circuit for discharging stored charges from the smoothing condenser, may be configured to include a discharge controller to drive the DC/DC converter upon detecting a failure of the exclusive discharge circuit and to supply the stored charges from the smoothing condenser to the auxiliary devices or the DC power supply so as to discharge them therethrough.

In addition, a control program of the electric vehicle power conversion system according to the present invention may include: a motor driving power system connected to a DC main power supply and outputting a DC voltage therefrom to a motor generator through an inverter circuit; and an auxiliary device power system connected to the DC main power supply to be in parallel with the motor driving power system and supplying power to auxiliary devices or a DC auxiliary power supply of an electric vehicle through the DC/DC converter, wherein the motor driving power system is configured to connect a smoothing condenser for smoothing the DC voltage, a resistor, and a semiconductor switch element in series, to include an exclusive discharge circuit for discharging stored charges from the smoothing condenser, and to include a function of the discharge controller that drives the DC/DC converter upon detecting a failure of the exclusive discharge circuit and supplies the stored charges from the smoothing condenser to the auxiliary devices or the DC power supply so as to discharge them therethrough, in a computer.

According to the electric vehicle power conversion system, the control device thereof, and the control program thereof, the discharge controller detects a failure of the exclusive discharge circuit, and the discharge controller may enable the exclusive discharge circuit to discharge the stored charges from the smoothing condenser as usual when the exclusive discharge circuit operates normally, thereby decreasing an inter-terminal voltage of the smoothing condenser to a safety value within a predetermined time.

When detecting a failure of the exclusive discharge circuit, the discharge controller can control the DC/DC converter of the auxiliary device power system and supply the stored charges from the smoothing condenser to the auxiliary device or the DC power supply to discharge them therethrough, thereby decreasing the inter-terminal voltage of the smoothing condenser to the safety value within the predetermined time.

The DC/DC converter of the auxiliary device power system is used, no additional circuits or parts are required, the stored charges of the smoothing condensers can be discharged through the existing circuit, and redundancy for a discharging function of the smoothing condenser may be provided.

Further, the stored charges of the smoothing condenser may be supplied to the DC auxiliary power supply to be discharged therethrough, such that they may be stored as energy without consuming the charges stored in the smoothing condenser.

Embodiments of the invention may control the DC/DC converter of the auxiliary device power system when the exclusive discharge circuit fails and supply the stored charges from the smoothing condenser to the auxiliary device or DC power supply, thereby reliably discharging the stored charges from the smoothing condenser.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electric vehicle power conversion system, comprising:
a motor driving power system connected to a DC main power supply and adapted tooutput a DC voltage therefrom to a motor generator through an inverter circuit;
an auxiliary device power system connected to the DC main power supply in parallel with the motor driving power system and adapted to supply power to a DC auxiliary power supply or auxiliary devices of an electric vehicle through a DC/DC converter; and
a control circuit for controlling the motor driving power system and the auxiliary device power system,
wherein the motor driving power system includes a smoothing condenser adapted to smooth the DC voltage, a resistor, and a semiconductor switch element connected in series and includes an exclusive discharge circuit for discharging stored charges from the smoothing condenser, and
wherein the control circuit includes a discharge controller adapted to drive the DC/DC converter upon detecting a failure of the exclusive discharge circuit and to supply the stored charges from the smoothing condenser to the auxiliary devices or the DC auxiliary power supply and discharge the stored charges therethrough.

2. An electric vehicle power conversion system as claimed in claim 1, wherein the discharge controller is adapted to detect failure of the exclusive discharge circuit when an inter-terminal voltage of the smoothing condenser is not discharged to a target voltage within a predetermined time from a starting of a discharging.

3. An electric vehicle power conversion system as claimed in claim 1 or 2, wherein the motor driving power system includes a voltage booster circuit adapted to voltage-convert the DC voltage from the DC main power supply.

4. An electric vehicle power conversion system as claimed in claim 3, wherein the smoothing condenser includes a first smoothing condenser connected between the DC main power supply and the voltage booster circuit, and a second smoothing condenser connected between the voltage booster circuit and the inverter circuit.
